Europäisches Patentamt

European Patent Office

Office européen des brevets

(19)

(11) EP 0 779 998 B1

(12) **EUROPÄISCHE PATENTSCHRIFT**

(45) Veröffentlichungstag und Bekanntmachung des Hinweises auf die Patenterteilung:
**25.03.1998   Patentblatt 1998/13**

(21) Anmeldenummer: **95929756.5**

(22) Anmeldetag: **05.09.1995**

(51) Int Cl.⁶: **G05D 1/02**

(86) Internationale Anmeldenummer:
**PCT/DE95/01204**

(87) Internationale Veröffentlichungsnummer:
**WO 96/07959 (14.03.1996 Gazette 1996/12)**

(54) **VERFAHREN ZUR BESTIMMUNG DER POSITION EINER LANDMARKE IN DER UMGEBUNGSKARTE EINER SELBSTBEWEGLICHEN EINHEIT, DEREN ABSTAND ZUR EINHEIT DYNAMISCH VON DIESER ERMITTELT WIRD**

PROCESS FOR DETERMINING THE POSITION OF A LANDMARK IN THE MAP OF THE ENVIRONMENT OF AN AUTOMOTIVE UNIT WHICH DYNAMICALLY DETERMINES ITS DISTANCE FROM THE LANDMARK

PROCEDE DE DETERMINATION DE LA POSITION D'UN POINT DE REPERE DANS LA CARTE DE L'ENVIRONNEMENT D'UNE UNITE AUTOMOBILE QUI DETERMINE DYNAMIQUEMENT LA DISTANCE QUI LA SEPARE DU POINT DE REPERE

(84) Benannte Vertragsstaaten:
**CH DE FR GB LI**

(30) Priorität: **06.09.1994   DE 4431752**

(43) Veröffentlichungstag der Anmeldung:
**25.06.1997   Patentblatt 1997/26**

(73) Patentinhaber: **SIEMENS AKTIENGESELLSCHAFT**
**80333 München (DE)**

(72) Erfinder: **RENCKEN, Wolfgang**
**D-85435 Erding (DE)**

(56) Entgegenhaltungen:
**WO-A-87/07056          DE-A- 4 324 531**
**US-A- 4 809 178**

- **AUTONOMOUS ROBOT VEHICLES,SPRINGER VERLAG, 1990 Seiten 167 - 193 R.SMITH ET AL 'ESTIMATING UNCERTAIN SPATIAL RELATIONSHIPS IN ROBOTICS'**
- **5TH SYMPOSIUM ON ROBOTICS RESEARCH, 1989 Seiten 85 - 94 P.MOUTALIER ET AL 'STOCHASTIC MULTISENSORY DATA FUSION FOR MOBILE ROBOT LOCATION AND ENVIROMENT MODELLING'**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Heutzutage gibt es vielfältige Einsatzmöglichkeiten für autonom operierende mobile Einheiten. Man denke in diesem Zusammenhang an Fernerkundungssonden, an mobile Einheiten, die in Gefahrengebieten operieren, an selbstbewegliche Industriestaubsauger, an Transportfahrzeuge in der Fertigungsindustrie und nicht zuletzt an selbstbewegliche Roboter. Um jedoch eine sinnvolle Aufgabe in einer a priori unbekannten Umgebung erfüllen zu können, muß ein autonomer, mobiler Roboter sowohl schrittweise eine zuverlässige Karte seiner Arbeitsumgebung aufbauen, als auch sich anhand dieser Karte zu jedem gegebenen Zeitpunkt selbst lokalisieren können. Wegen der sehr komplexen und unstrukturierten Umgebungen, in denen solche selbstbeweglichen Einheiten möglicherweise manövrieren, bleiben ihre Einsatzbereiche häufig auf Büro und Haushaltsumgebungen beschränkt. Da im allgemeinen eine a priori Karte nicht verfügbar ist, muß eine solche selbstbewegliche Einheit mit Sensoren ausgestattet sein, welche es der Einheit erlauben, flexibel mit ihrer Umgebung in Wechselwirkung zu treten. Einige solche Sensoren sind Laser-Entfernungsscanner, Videokameras und beispielsweise Ultraschallsensoren.

Ein besonderes Problem dieser mobilen Einheiten besteht darin, daß die Bildung der Umgebungskarte und die Lokalisierung der mobilen Einheit voneinander abhängen. Es gehen dabei verschiedene Fehler ein. Zum einen vermißt eine solche mobile Einheit ihre von einer Ausgangsposition aus zurückgelegte Wegstrecke, zum anderen vermißt sie mit Entfernungssensoren die Entfernung zu auftretenden Hindernissen und trägt diese als Landmarken in der Umgebungskarte ein. Da sich diese Fehler kummulieren und über längere Strecken aufsummieren, ist ab einer bestimmten Grenze eine sinnvolle Manövrierbarkeit der mobilen Einheit nicht mehr gegeben.

Bisherige Lösungsansätze für dieses Problem beruhen darauf, daß charakteristische Landmarken in der Umgebung erkannt werden und ihre Positionen relativ zur mobilen Einheit vermessen werden. Aus diesen relativen Positionen der Landmarken und der absoluten Position der Einheit werden die absoluten Lagen der Landmarken bestimmt. Alle Sensormessungen sind in der Regel mit Unsicherheiten behaftet. Daher werden Verfahren eingesetzt, mit denen die bestmögliche Schätzung für die Position der mobilen Einheit und die Positionen der Landmarken gleichzeitig gefunden werden. Bisher gibt es verschiedenste Ansätze zur Lösung dieses Problems.

In einem Verfahren von Leonhard und Durrant-Whyte [2] (siehe Literaturverzeichnis) werden die Unsicherheitsrelationen zwischen den Landmarken und der mobilen Einheit nicht berücksichtigt. So wird einerseits die Rechenzeit drastisch reduziert, andererseits können die Fehler zwischen den prädizierten und gemessenen Sensorwerten nicht den jeweiligen Fehlerquellen zugeordnet werden. Um eine Stabilität des Verfahrens zu gewährleisten, muß vorausgesetzt werden, daß die mobile Einheit im Stillstand sehr genau Landmarken detektieren kann. Somit sind sehr genaue Sensoren gefordert, die auch wiederum wegen ihrer hohen Kosten die praktische Verwendung dieses Verfahrens begrenzen.

Allgemeine Angaben zur Kartenbildung und zur Bewegung von mobilen Einheiten in kartographierten Umgebungen können [1] und [2] (siehe Literaturverzeichnis) entnommen werden.

Damit ein mobiler Roboter seine Position innerhalb seiner Umgebung bestimmen kann, müssen die aktuellen Sensormessungen mit einer internen Karte korreliert werden, d.h. es muß entschieden werden, welche Messung mit welcher Landmarke der Karte übereinstimmt. Aus der Zuordnung kann dann die aktuelle Roboterposition geschätzt werden. Wenn die verwendeten Lösungen wenig Fehlmessungen ergeben, kann für jede Messung eine Zuordnung gefunden werden. Wenn es jedoch häufig Fehlmessungen gibt, können nur solche Messungen zugeordnet werden, die mit einer hohen Wahrscheinlichkeit mit einer Landmarke übereinstimmen. Dafür wird ein sog. Validation-Gate-Verfahren verwendet [1,2] (siehe Literaturverzeichnis). Dieses Verfahren berechnet aufgrund der Differenz zwischen der Messung und der prädizierten Messung der zugeordneten Landmarke und deren respektiven Unsicherheiten, die Wahrscheinlichkeit, daß die Zuordnung korrekt ist. Beispielsweise werden nur solche Zuordnungen akzeptiert, deren statistischer Abstand unterhalb einer bestimmten Grenze liegt. Ist diese Grenze klein, werden nur statistisch eng benachbarte, und somit extrem sichere, Zuordnungen erlaubt. Wenn die Differenzen zwischen den Messungen und den prädizierten Messungen der zugeordneten Landmarken über die Zeit klein bleiben, funktioniert dieses Recht gut. In einer realen Umgebung aber führt dieses schnell zu Problemen, wenn Landmarken durch unbekannte Objekte verdeckt werden. Solange die Landmarken verdeckt sind, werden korrekterweise keine Zuordnungen gemacht. Wenn im Anschluß die Landmarken wieder sichtbar werden, kann es geschehen, daß die geschätzte Roboterposition aufgrund des Schlupfes der Antriebsräder mittlerweile so fehlerhaft geworden ist, daß es wegen des strengen Kriteriums niemehr zur Zuordnung kommen kann, und die selbstbewegliche mobile Einheit sich endgültig in ihrer Umgebung verirrt. Wird diese Schranke andererseits zu groß gewählt, werden auch unwahrscheinliche Zuordnungen erlaubt. Die Gefahr, daß dann falsche Zuordnungen gemacht werden, ist sehr groß mit der Folge, daß verheerende Fehler bei der Positionsbestimmung der Einheit gemacht werden können, die später nicht wieder behebbar sind. In den zitierten Lösungen wird aufgrund empirischer Erfahrung der Parameter so gewählt, daß in den meisten Fällen eine akzeptable Zuordnung erfolgt.

Der Erfindung liegt die Aufgabe zugrunde, ein Verfahren anzugeben, mit dessen Hilfe eine verbesserte Zuordnung von Messergebnissen zu den zugehörigen Landmarken in der Umgebungskarte einer autonomen mobilen Einheit möglich ist und damit die Positionsbestimmung der Einheit in der Umgebung verbessert wird.

Diese Aufgabe wird gemäß den Merkmalen des Patentanspruchs 1 gelöst.

Weiterbildungen der Erfindung ergeben sich aus den Unteransprüchen.

Ein besonderer Vorteil des erfindungsgemäßen Verfahrens besteht darin, daß Messungen, die nicht eindeutig einer Landmarke zugeordnet werden können, über den Systemfehler und eine vorgegebene positive Schranke bezüglich der zugehörigen Landmarke diskriminiert werden können. Die positive Schranke bedeutet hierbei, daß der prädizierte Wert kleiner sein sollte als der aktuelle Meßwert. So wird vorteilhaft durch das erfindungsgemäße Verfahren sichergestellt, daß in dynamischen veränderlichen Umgebungen, beispielsweise wenn zwischen zwei Meßintervallen ein Hindernis zwischen einer Landmarke und die selbstbewegliche mobile Einheit gerät, dieser Landmarke nicht ein falscher Wert zugewiesen wird.

Vorteilhafterweise werden durch das erfindungsgemäße Verfahren aus der Menge der in der Umgebungskarte vorhandenen Landmarken nur jene ausgewertet, welche sich innerhalb eines Bereiches in Fahrtrichtung vor der Einheit befinden.

Besonders vorteilhaft wird durch das erfindungsgemäße Verfahren dem Systemfehler keine fixe Grenze gesetzt, sondern vielmehr ist diese Schranke dynamisiert. So kann die Position von ungenau bestimmbaren Landmarken immer noch einem Objekt in der Umgebungskarte zugeordnet werden.

Besonders vorteilhaft wird die Ungenauigkeit, die durch die Erhöhung der Schranke im erfindungsgemäßen Verfahren für den Selbstsystemfehler erzeugt wird, dadurch beschränkt, daß ständig überprüft wird, wie sich die Zahl der bestimmten Landmarken zu der Zahl der prädizierten Landmarken verhält. Ein Anstieg der Zahl von bestimmten Landmarken könnte z.B. Zweifachzuordnungen bedeuten. Solche werden dadurch vorteilhaft vermieden. Um das Verfahren beenden zu können, wenn keinerlei Positionsbestimmung einer Landmarke möglich ist, wird vorteilhaft für dessen Zyklenzahl eine Schranke vorgegeben.

Der Einsatz eines Odometers als Wegmeßgerät für das erfindungsgemäße Verfahren ist besonders günstig bei radgetriebenen Fahrzeugen.

Günstigerweise kann für das erfindungsgemäße Verfahren je nach Einsatzbereich der mobilen Einheit ein kostengünstiges Entfernungsmeßgerät verwendet werden, mit dem Landmarken erkannt werden.

Vorteilhaft ist es, die Meßunsicherheit des Sensors für die Entfernungsmessung zu berücksichtigen, da so die aktuelle Position bzw. deren Unsicherheit einer Landmarke genauer erkannt werden kann.

Besonders vorteilhaft bezieht man für die obere Schranke von $\gamma$ die Zahl der möglichen Iterationen n mit ein, um eine sinnvolle Genauigkeit bei der Positionsbestimmung der Landmarken zu erzielen. Vorteilhaft ist es für Büroumgebungen für $\gamma_{min}$ 2, $\gamma_{max}$ 4, $n_{max}$ 3, und das Zulässigkeitsverhältnis 1,49 als Werte zu wählen.

Im folgenden wird die Erfindung anhand von Figuren weiter erläutert.

Figur 1 zeigt dabei eine selbstbewegliche Einheit in einer Umgebung.

Figur 2 zeigt die Aufteilung des Systemfehlers.

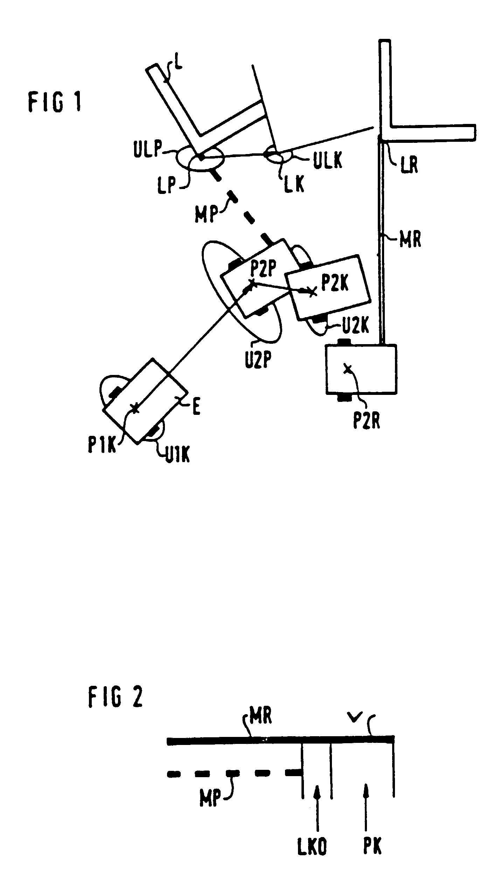

In Figur 1 sind zur Begriffsklärung Grundlagen des erfindungsgemäßen Verfahrens dargestellt. Es ist eine mobile Einheit E auf verschiedenen Positionen dargestellt, die für das erfindungsgemäße Verfahren charakteristisch sind. Weiterhin ist eine Landmarke L zu erkennen, deren Lage bestimmt wird.

Zur Beginn ihrer Bewegung befindet sich hier beispielsweise die mobile Einheit E einer Position P1K, die mit einer Unsicherheit U1K behaftet ist. Diese Positionsunsicherheit ist durch eine Ellipse dargestellt. Nach einem Bewegungsvorgang befindet sich die Einheit an einer Position P2P. Diese Position P2P ist eine prädizierte Position, d.h. aufgrund der Messungen mit beispielsweise einem Odometer sollte sich in Relation zur Ausgangsposition P1K die mobile Einheit nun an der Position P2P befinden. Diese Position entspricht jedoch nicht dem realen Aufenthaltsort der Einheit in der Umgebung, da die Wegmessung fehlerbehaftet ist. Die Position P2P ist beispielsweise in einer Umgebungskarte in einem Orientierungsrechner der mobilen Einheit als aktuelle Position gespeichert und als aktuelle Position in der Umgebungskarte eingetragen. Aufgrund einer von der Position P1K durchgeführten Entfernungsmessung zur Landmarke in LR, wird nun von der Position P2P ein Abstand MP zur vermeintlichen Lage LP der Landmarke prädiziert. Die Lage LP der Landmarke L weist in diesem Fall eine mit einer Ellipse dargestellte Unsicherheit ULP auf.

Die Position P2P ist jedoch nicht die reale Position, welche von der Einheit eingenommen wird. In Wirklichkeit befindet sie sich an der Position P2R. Durch eine Messung mit einem Entfernungsmessgerät, beispielsweise einem Laserradar oder einem Ultraschallsensor wird nun der reale Abstand der Einheit MR zur Lage der Landmarke LR bestimmt. Hierbei ist zu beachten, daß weder die Position P2R, noch die Lage LR der Landmarke eine Unsicherheit aufweisen, da es sich hierbei um die realen Positionen handelt. Falls Entfernungsmeßgeräte, die einen Fehler aufweisen, verwendet werden, wäre er hier zu berücksichtigen. Seine Verarbeitung ist jedoch nicht notwendig zur Durchführung des erfindungsgemäßen Verfahrens.

Wie das in der zitierten Literatur genauer beschrieben ist, wird beispielsweise die Position einer mobilen Einheit in Form von Koordinaten und in Form einer Orientierung, die im Koordinatensystem einen Drehwinkel der Einheit angibt, beschrieben. Daraus kann man ersehen, daß eine Abstandsmessung auch abhängig von der Drehorientierung der mobilen Einheit in einem Koordinatensystem ist. Beispielsweise sind diese Drehorientierungen und der Abstand bei der Korrektur der Position und der Landmarke der mobilen Einheit zu berücksichtigen.

Da nun die Größen, die für das erfindungsgemäße Verfahren Voraussetzung sind, zur Verfügung stehen, kann es durchgeführt werden.

Das heißt, nun wird der reale Abstand MR mit dem prädizierten Abstand verglichen und es wird beispielsweise die Differenz v gebildet. Diese Differenz weist in Abhängigkeit der Lageunsicherheit ULP und der Positionsunsicherheit U2P eine Unsicherheit auf. Sie kann beispielsweise entsprechend aufgeteilt werden und mit dem jeweiligen Anteil die Lage der Landmarke und die Position der mobilen Einheit in der Umgebungskarte korrigiert werden. Man erhält für die Landmarke dann beispielsweise die Position LK mit einer Unsicherheit ULK, wobei zu beachten ist, daß die Unsicherheit ULK kleiner ist als die Unsicherheit ULP. Für die mobile Einheit erhält man nach der Durchführung des erfindungsgemäßen Verfahrens die Position P2K mit einer Unsicherheit U2K, wobei wiederum gilt, daß diese Unsicherheit U2K geringer ist als die Unsicherheit U2P.

Bei einer Verwendung dieser neuen Werte für einen weiteren Schritt des erfindungsgemäßen Verfahrens in der Startkarte, kann man auf einer geringeren Unsicherheit aufsetzen und somit neue Positionen der Einheit und neue Lagen von Landmarken mit einer größeren Genauigkeit bestimmen.

Figur 2 veranschaulicht die Berechnung des Systemfehlers nach dem erfindungsgemäßen Verfahren. Es sind dargestellt, die reale Messung MR und die prädizierte Abstandsmessung MP. Die Differenz aus diesen beiden Abständen ergibt beispielsweise den Systemfehler v. Dieser Systemfehler wird nun beispielsweise in eine Lagekorrektur LKO und eine Positionskorrektur PK aufgeteilt. Die Aufteilung erfolgt beispielsweise nach der Größe der jeweiligen Unsicherheit, mit der die Positionsbestimmung, bzw. die Lagebestimmung behaftet ist. Mit der Lagekorrektur LKO kann die Lage einer Landmarke korrigiert und mit der Positionskorrektur PK die Position der mobilen Einheit in der Umgebungskarte neu festgelegt werden. Hierbei ist zu beachten, daß bei der Korrektur sowohl die Position der mobilen Einheit in einem Koordinatensystem zu einer bestimmten Zeit, als auch die Drehrichtung der mobilen Einheit zu berücksichtigen ist.

Die Korrektur der jeweiligen Positionen bzw. Lage kann dann durch Anwendung der entsprechenden Winkelfunktionen auf die Koordinatenwerte erfolgen. Bei der Zuordnung eines Meßwertes von einer Landmarke zu einer in der Umgebungskarte vorhanden Landmarke ist dieser Fehler als Schranke für die Zulässigkeit einer Zuordnung nützlich. Er sollte dabei beispielsweise zunächst einen festgelegten Wert nicht überschreiten.

Das erfindungsgemäße Verfahren geht von einer dynamisch variierten Validation-Gate Größe aus. Zuerst wird versucht, anhand eines strengen Kriteriums die Messungen den Landmarken zuzuordnen und damit deren Position in der Umgebungskarte und in Relation dazu die Position der mobilen Einheit zu bestimmen. Werden genügend Zuordnungen gefunden, z.B. ein gewisser Prozentsatz der prädizierten Zuordnungen werden tatsächlich akzeptiert, dann werden nur die Zuordnungen gewählt, die dieses strenge Kriterium erfüllen. Ist dies aus einem der eingangs geschilderten Gründe nicht möglich, wird das Validation-Gate etwas vergrößert, um auch etwas unsichere Zuordnungen zu erlauben. Dieser Vorgang wird solange fortgeführt, bis beispielsweise die erlaubten Zuordnungen einen gewissen Prozentsatz der prädizierten Zuordnungen überschreiben, oder aber eine maximale Anzahl an Schritten durchgeführt ist. Letzteres ist auch nötig, da es in bestimmten Situationen, wenn z.B. ein Gebiet völlig verändert wurde, nie möglich ist, das Prozentsatzkriterium zu erfüllen. Beispielsweise wird für den Zusammenhang zwischen der anfänglichen Größe $\gamma_{min}$, der maximalen Größe $\gamma_{max}$ und der maximalen Anzahl der Iterationen folgende Formel gewählt:

$$\gamma_{max} = \gamma_{min} + n_{max}$$

Es kann beispielsweise wie folgt vorgegangen werden.

1 berechne anhand der Formel 1 bis 3 für jede mögliche Zuordnung die entsprechende statistische Distanz d(k). Die Menge dieser Zuordnungen wird mit M(k) gekennzeichnet. Die Formeln lauten dabei:

$$v(k+1)=z(k+1)-\hat{z}(k+1\,|\,k) \tag{1}$$

$$d(k) = v(k+1)S^{-1}(k)v^{T}(k+1) \tag{2}$$

$$S(k+1) = \nabla h_{\hat{x}(k+1\|k)} P(k+1\|k) \nabla h_{\hat{x}(k+1\|k)}^{T}$$
$$+ \nabla h_{\hat{p}_t(k+1\|k)} \Lambda_t(k+1\|k) \nabla h_{\hat{p}_t(k+1\|k)}^{T} + R(k+1) \quad (3)$$

Die Bedeutung der Formelzeichen ist in den Patentansprüchen erklärt.

2 wähle aus M(k) die Zuordnungen deren Distanz kleiner als $\gamma_{max}^2$ ist. Die neue Menge wird mit $M_{max}$ gekennzeichnet.

3 Wähle aus $M_{max}$ die Zuordnungen mit v > 0 aus, da die Landmarken vermutlich nicht verdeckt sind. Die neue Menge wird mit $M_{vis}$ gekennzeichnet. Dieser Schritt ist notwendig, da sonst fehlerhafte Zuordnungen gemacht werden bei einem größeren Validation-Gate.

4 die Anzahl der prädizierten Zuordnungen $N_{pred}$ ergibt sich aus der Kardinalzahl von $M_{vis}$. Die Anzahl der akzeptierten Zuordnungen wird mit $N_{acc}$ gekennzeichnet.

5 Setze $\gamma = \gamma_{min}$, n = 0 und $N_{acc}$ = 0

6 aus der Menge $M_{max}$ suche die Zuordnungen welche, anhand von Formel (4), akzeptiert werden.

$$d \le \gamma^2 \qquad (4)$$

7 Wenn gilt $N_{acc}/N_{pred} \le T$ und $n < n_{max}$, erhöhe n und daraus $\gamma$. T ist die Prozentsatzschwelle.

8 Wiederhole Schritte 6 und 7 bis die Abbruchbedingungen erfüllt sind.
Beispielsweise ergeben in ganz normalen Büroumgebungen Wert von $\gamma_{min} = 2$, $\gamma_{max} = 4$, $n_{max} = 3$ und T = 0,67 eine Steigerung von bis zu 200% in der Genauigkeit der Positionsbestimmung von Landmarken gegenüber herkömmlichen Verfahren.

Literaturverzeichnis

[1] Y. Bar-Shalom and T.E. Fortmann, Tracking and Data Association (S 52-61; S 100-109). Academic Press, 1988.

[2] J.J. Leonard and H.F. Durrant-Whyte, Directed Sonar Sensing for Mobile Robot Navigation (S 51-65; S 97-111; S 129-138). Kluwer Academic Publishers, Boston, London, Dordrecht, 1992

**Patentansprüche**

1. Verfahren zur Bestimmung der Position einer Landmarke in der Umgebungskarte einer selbstbeweglichen Einheit, deren Abstand zur Einheit dynamisch von dieser ermittelt wird,

   a) bei dem mindestens von der Einheit (E) eine Positionsveränderung durch mindestens ein an der Einheit angeordnetes erstes Meßmittel ermittelt wird,
   b) bei dem von der Einheit mindestens ein Abstand (MR) eines ersten Hindernisses in der Umgebung relativ zur Einheit (E) durch mindestens ein an der Einheit angeordnetes zweites Meßmittel ermittelt und als erste Landmarke (L) in der Umgebungskarte eingetragen wird,
   c) bei dem mindestens an einer Ausgangsposition die Position (P1K) der Einheit (E) und die Lage (LR) der ersten Landmarke (L) in der Umgebungskarte den realen Verhältnissen in der Umgebung entsprechen,
   d) bei dem nach Fortbewegung der Einheit mindestens eine erste Eigenposition (P2P) der Einheit (E) relativ zur Ausgangsposition (P1K) mit einer Positions-Unsicherheit (U2P) ermittelt wird,
   e) bei dem von der ersten Eigenposition (P2P) mindestens ein erster Abstand (MP) des Ersten Hindernisses mit einer Lage-Unsicherheit (ULP) ermittelt und ein erster Abstand eines mutmaßlichen zweiten Hindernisses, einer Bestimmungslandmarke, gemessen wird,

f) bei dem von einer zweiten Eigenposition mindestens ein zweiter Abstand des mutmaßlichen zweiten Hindernisses gemessen wird,

g) bei dem für die zweite Eigenposition mit dem ersten Abstand (MP) und der Positionsveränderung zwischen der ersten Eigenposition und der zweiten Eigenposition ein prädizierter zweiter Abstand des ersten- und des zweiten Hindernisses berechnet wird,

h) bei dem als erster und zweiter Systemfehler (v) mindestens die Differenz von dem gemessenen zweiten Abstand des mutmaßlichen zweiten Hindernisses und dem berechneten prädizierten zweiten Abstand des ersten und des mutmaßlichen zweiten Hindernisses bestimmt wird,

i) und bei dem zur Bestimmung der Position der ersten Landmarke dieser die Position des mutmaßlichen zweiten Hindernisses in der Umgebungskarte zugewiesen wird, wenn der Betrag des zweiten Systemfehlers eine festgesetzte Schranke unterschreitet und positiv ist.

2. Verfahren nach Anspruch 1,
bei dem aus mindestens zwei zeitlich aufeinander folgenden Systemfehlern eine Wahrscheinlichkeit für die Große des Systemfehlers berechnet wird und bei dem nur solche Landmarken bestimmt werden die sich in Fahrtrichtung vor der Einheit befinden.

3. Verfahren nach einem der Ansprüche 1 bis 2,
bei dem falls die Position einer Landmarke nicht mehr bestimmt werden kann, da der Systemfehler zu groß wird, die Schranke erhöht wird.

4. Verfahren nach einem der Ansprüche 1 bis 3,
bei dem die Erhöhung der Schranke nur in dem Maße durchgeführt werden kann, wie das Verhältnis aus der Zahl der bestimmten Landmarken und der Zahl der prädizierten Landmarken einen festgesetzten Wert, die Zulässigkeitsschranke, nicht übersteigt.

5. Verfahren nach einem der vorangehenden Ansprüche,
das wiederholt durchgeführt wird und bei dem für den Fall, daß keine Lage einer Landmarke bestimmt werden kann, die Zahl der Wiederholungen beschränkt wird

6. Verfahren nach einem der voranstehenden Ansprüche, bei dem als erstes Meßmittel ein Odometer verwendet wird.

7. Verfahren nach einem der voranstehenden Ansprüche, bei dem als zweites Meßmittel ein Entfernungsmeßgerät verwendet wird.

8. Verfahren nach einem der voranstehenden Ansprüche, bei dem die Messungenauigkeit mindestens eines Meßmittels dem Systemfehler zugeschlagen wird.

9. Verfahren nach einem der voranstehenden Ansprüche, bei dem die Messungenauigkeit mindestens eines Meßmittels aufgeteilt und ein Teil der Positions-Unsicherheit und ein weiterer Teil der Lage-Unsicherheit zugeschlagen wird.

10. Verfahren nach einem der voranstehenden Ansprüche,

a) bei dem der Systemfehler zum Zeitpunkt k zu

$$v(k+1)=z(k+1)-\hat{z}(k+1|k)$$

bestimmt wird und sich die Unsicherheit des Systemfehlers daraus zu

$$S(k+1) = \nabla h_{\hat{x}(k+1|k)} P(k+1|k) \nabla h^T_{\hat{x}(k+1|k)}$$

$$+\nabla h_{\hat{p}_t(k+1|k)} \Lambda_t(k+1|k) \nabla h^T_{\hat{p}_t(k+1|k)} + R(k+1)$$

ergibt woraus sich der statistische Abstand zwischen der Messung und der prädizierten Messung als

$$d(k) = v(k+1) S^{-1}(k) v^T(k+1)$$

ableitet und als Schranke

$$d \leq \gamma^2$$

vorgegeben wird
mit $\gamma_{max} = \gamma_{min} + n_{max}$ als Bereichsvorgabe, n Zahl der maximal möglichen Iterationen.
mit einem Meßfehler R(k+1) und mit

v(k+1):      Systemfehler zur Zeit k+1

$\hat{z}(k+1|k)$:      berechneter prädizierter Landmarkenabstand zur Zeit k+1 mit    $\hat{z}(k+1|k) = h(\hat{x}(k+1|k), \hat{p}_t(k+1|k))$

$\hat{x}(k+1|k)$:      prädizierte Eigenposition der Einheit zur Zeit k+1

$\hat{p}_t(k+1|k)$:      prädizierte Landmarkenposition der Einheit zur Zeit k+1

$\nabla h_{\hat{p}_t(k+1|k)}$ :      Jakobische der Funktion h nach $\hat{p}_t(k+1|k)$

$\nabla h_{\hat{x}(k+1|k)}$ :      Jakobische der Funktion h nach $\hat{x}(k+1|k)$

$P(k+1|k)$:      Kovarianzmatrix von $\hat{x}(k+1|k)$ zur Zeit k+1

$\Lambda_t(k+1|k)$:      Kovarianzmatrix von $\hat{p}_t(k+1|k)$ zur Zeit k+1

Indizes ^ :      prädizierter Wert

**11.** Verfahren nach Anspruch 10, bei dem R(k+1) = 0 gilt

**12.** Verfahren nach einem der Ansprüche 10 bis 11, bei dem folgende Schranken gelten:
$\gamma_{max} = 4$      $\gamma_{min} = 2$      $n_{max} =$ und als Zulässigkeitsschranke 1,5.

## Claims

**1.** Method of determining the position of a landmark in the environment map of a self-propelled unit, the distance of the landmark from the unit being determined dynamically by the latter,

a) in which, at least by the unit (E), a position change is determined by at least one first measuring means arranged on the unit,
b) in which, by the unit, at least one distance (MR) of a first obstacle in the environment relative to the unit (E) is determined by at least one second measuring means arranged on the unit, and is entered in the environment map as first landmark (L),
c) in which, at least at a starting position, the position (P1K) of the unit (E) and the location (LR) of the first landmark (L) in the environment map correspond to the real relationships in the environment,

d) in which, after a movement away of the unit, at least one first own position (P2P) of the unit (E) relative to the starting position (P1K) is determined with a position uncertainty (U2P),

e) in which, from the first own position (P2P), at least one first distance (MP) to the first obstacle is determined with a position uncertainty (ULP) and a first distance to a suspected second obstacle, a determining landmark, is measured,

f) in which, from a second own position, at least one second distance to the suspected second obstacle is measured,

g) in which, for the second own position, using the first distance (MP) and the position change between the first own position and the second own position, a predicted second distance to the first and to the second obstacle is calculated,

h) in which, as the first and second system error (v), at least the difference between the measured second distance to the suspected second obstacle and the calculated predicted second distance to the first and to the suspected second obstacle is determined,

i) and in which, for determining the position of the first landmark, the latter is allocated the position of the suspected second obstacle in the environment map if the magnitude of the second system error falls below a fixed unit and is positive.

2. Method according to Claim 1, in which, from at least two chronologically successive system errors, a probability is calculated for the size of the system error, and in which only such landmarks as are located in front of the unit in the direction of travel are determined.

3. Method according to one of Claims 1 and 2, in which, in the event that the position of a landmark can no longer be determined, since the system error is becoming too large, the limit is raised.

4. Method according to one of Claims 1 to 3, in which the raising of the limit can be carried out only to the extent to which the ratio of the number of determined landmarks to the number of predicted landmarks does not exceed a fixed value, the reliability limit.

5. Method according to one of the preceding claims, which is carried out repeatedly and in which, for the case in which no location of a landmark can be determined, the number of repetitions is restricted.

6. Method according to one of the preceding claims, in which an oedometer is used as first measuring means.

7. Method according to one of the preceding claims, in which a distance meter is used as second measuring means.

8. Method according to one of the preceding claims, in which the measurement inaccuracy of at least one measuring means is added to the system error.

9. Method according to one of the preceding claims, in which the measurement inaccuracy of at least one measuring means is partitioned and one part is added to the position uncertainty and another part to the location uncertainty.

10. Method according to one of the preceding claims,

a) in which the system error at time k is determined to be

$$v(k+1) = z(k+1) - \hat{z}(k+1|k)$$

and the uncertainty of the system error results therefrom as

$$S(k+1) = \nabla h_{\hat{x}(k+1|k)} P(k+1|k) \nabla h^T_{\hat{x}(k+1|k)}$$
$$+ \nabla h_{\hat{p}_l(k+1|k)} \Lambda_l(k+1|k) \nabla h^T_{\hat{p}_l(k+1|k)} + R(k+1)$$

from which the statistical distance between the measurement and the predicted measurement is derived as

$$d(k) = v(k+1)S^{-1}(k)v^T(k+1)$$

and

$$d \leq \gamma^2$$

is prescribed as the limit
with $\gamma_{max} = \gamma_{min} + n_{max}$ as prescribed range, where n is the maximum number of possible iterations,
with a measurement error R(k+1) and with

| | |
|---|---|
| $v(k+1)$ : | System error at time k+1 |
| $\hat{z}(k+1\|k)$ : | Calculated predicted landmark distance at time k+1 with $\quad \hat{z}(k+1\|k) = h(\hat{x}(k+1\|k), \hat{p}_t(k+1\|k))$ |
| $\hat{x}(k+1\|k)$ : | Predicted own position of the unit at time k+1 |
| $\hat{p}_t(k+1\|k)$ : | Predicted landmark position of the unit at time k+1 |
| $\nabla h_{\hat{p}(k+1\|k)}$ : | Jacobean Jacobean of the function h, modulus $\hat{p}_t(k+1\|k)$ |
| $\nabla h_{\hat{x}(k+1\|k)}$ : | Jacobean of the function h, modulus $\hat{x}(k+1\|k)$ |
| $P(k+1\|k)$ : | Covariance matrix of $\hat{x}(k+1\|k)$ at time k+1 |
| $\Lambda_t(k+1\|k)$ : | Covariance matrix of $\hat{p}_t(k+1\|k)$ at time k+1 |
| Indices ^ : | Predicted value |

11. Method according to Claim 10, in which R(k+1) = 0 applies.

12. Method according to one of Claims 10 and 11, in which the following limits apply:
$\gamma_{max} = 4$, $\gamma_{min} = 2$ $n_{max} = 3$ and, as reliability limit, 1.5.

**Revendications**

1. Procédé de détermination de la position d'un point de repère dans la carte de l'environnement d'une unité automobile dont la distance par rapport à l'unité est déterminée dynamiquement par cette dernière,

   a) dans lequel au moins l'unité (E) détermine un changement de position grâce à au moins un premier dispositif de mesure placé sur ladite unité,
   b) dans lequel ladite unité détermine au moins une distance (MR) d'un premier obstacle dans l'environnement par rapport à l'unité (E) grâce à au moins un deuxième dispositif de mesure placé sur ladite unité et l'inscrit comme premier point de repère (L) dans la carte de l'environnement,
   c) dans lequel, à au moins une position de départ, la position (P1K) de l'unité (E) et la situation (LR) du premier point de repère (L) dans la carte de l'environnement correspondent aux conditions réelles dans l'environnement,
   d) dans lequel, après le déplacement de l'unité, au moins une première position propre (P2P) de l'unité (E) par rapport à la position de départ (P1K) est déterminée avec une incertitude de position (U2P),
   e) dans lequel à partir de la première position propre (P2P), au moins une première distance (MP) du premier obstacle est déterminée avec une incertitude de situation (ULP) et une première distance d'un présumé deuxième obstacle d'un point de repère signalétique est mesuré,
   f) dans lequel à partir d'une deuxième position propre, au moins une deuxième distance du présumé deuxième obstacle est mesurée,
   g) dans lequel est calculée pour la deuxième position propre, avec la première distance (MP) et le changement de position entre la première position propre et la deuxième position propre, une deuxième distance prédite par rapport au premier et deuxième obstacle,
   h) dans lequel est calculée comme première et deuxième erreur système (v) au moins la différence entre la deuxième distance mesurée du présumé deuxième obstacle et la deuxième distance prédite calculée du premier et du présumé deuxième obstacle, et
   i) dans lequel, pour déterminer la position du premier point de repère, celui-ci se voit affecter la position du présumé deuxième obstacle dans la carte de l'environnement, si la valeur de la deuxième erreur système est inférieure à une barrière définie et si elle est positive.

**2.** Procédé selon la revendication 1, dans lequel est calculée à partir de deux erreurs système successives dans le temps, une probabilité de l'importance de l'erreur système et dans lequel ne sont déterminés que les points de repère qui se trouvent avant l'unité dans le sens de la marche.

**3.** Procédé selon l'une des revendications 1 à 2, dans lequel, si la position d'un point de repère ne peut plus être déterminée du fait que l'erreur système devient trop importante, la barrière est augmentée.

**4.** Procédé selon l'une des revendications 1 à 3, dans lequel la barrière ne peut être augmentée que dans la mesure où le rapport entre le nombre des points de repère déterminés et le nombre des points de repère prédits ne dépasse pas une valeur définie, la barrière d'admissibilité.

**5.** Procédé selon l'une quelconque des revendications précédentes, qui est répété et dans lequel le nombre de répétitions est limité, si aucune situation d'un point de repère ne peut être déterminée.

**6.** Procédé selon l'une quelconque des revendications précédentes, dans lequel un odomètre est utilisé comme premier dispositif de mesure.

**7.** Procédé selon l'une quelconque des revendications précédentes, dans lequel un dispositif de mesure de distance est utilisé comme deuxième dispositif de mesure.

**8.** Procédé selon l'une quelconque des revendications précédentes, dans lequel l'imprécision de mesure d'au moins un dispositif de mesure est ajoutée à l'erreur système.

**9.** Procédé selon l'une quelconque des revendications précédentes, dans lequel l'imprécision de mesure d'au moins un dispositif de mesure est partagée, une part étant ajoutée à l'incertitude de position et une autre part à l'incertitude de situation.

**10.** Procédé selon l'une quelconque des revendications précédentes,

a) dans lequel l'erreur système à l'instant k est déterminée par :

$$v(k+1) = z(k+1) - \hat{\overset{\wedge}{Z}}(k+1|k)$$

et l'incertitude de l'erreur système en est déterminée par :

$$S(k+1) = \nabla h_{\hat{x}(k+1|k)} P(k+1|k) \nabla h_{\hat{x}(k+1|k)}^T$$
$$+ \nabla h_{\hat{p}_t(k+1|k)} \Lambda_t(k+1|k) \nabla h_{\hat{p}_t(k+1|k)}^T + R(k+1)$$

d'où se déduit la distance statistique entre la mesure et la mesure prédite, notée :

$$d(k) = v(k+1) S^{-1}(k) v^T(k+1)$$

qui est une barrière prédéfinie

$$d \leq \gamma^2$$

avec $\gamma_{max} = \gamma_{min} + n_{max}$ la zone prédéfinie, n le nombre des itérations maximales possibles
avec une erreur de mesure R (k+1)
et avec :

$v(k+1)$: erreur système à l'instant k+1

$\hat{Z}(k+1|k)$: distance prédite entre points de repère calculée à l'instant k + 1 avec $\hat{Z}(k+1|k)= h(\hat{x}(k+1|k),\hat{p}_t(k+1|k))$

$\hat{x}(k+1|k)$: position propre prédite de l'unité à l'instand k+1

$\hat{p}_t(k+1|k)$: position prédite des points de repère de l'unité à l'instant k+1

$\nabla h_{\hat{p}(k+1|k)}$: jacobien de la fonction h selon $\hat{p}_t(k+1|k)$

$\nabla h_{\hat{x}(k+1|k)}$: jacobien de la fonction h selon $\hat{x}(k+1|k)$

$P(k+1|k)$: matrice de covariance de $\hat{x}(k+1|k)$ à l'instant k+1

$\Lambda_t(k+1|k)$: matrice de covariance de $\hat{p}_t(k+1|k)$ à l'instant k+1

indices $\wedge$: valeur prédite.

11. Procédé selon la revendication 10, dans lequel R (k+1) = 0.

12. Procédé selon la revendication 10 ou 11, dans lequel s'appliquent les barrières suivantes :
$\gamma_{max} = 4$ $\gamma_{min} = 2$ $n_{max} = 3$ et la barrière d'admissibilité 1,5.

FIG 1

FIG 2